# EUROPEAN PATENT APPLICATION

(11) **EP 4 786 860 A1**
(43) Date of publication of application: **05.08.2026**
(21) Application number: 26153416.8
(22) Date of filing: 22.01.2026
(51) Int. Cl.: F24C 15/16, A47J 45/07

(54) **HANDLE FOR GRILLING ASSEMBLY**

(30) Priority: 04.02.2025 IT 202500002082
(71) Applicant: Beko Europe Management S.r.l., 20156 Milano (IT)
(72) Inventor: CASUCCI, Marco, Varese (VA) (IT); D'ANGELO, Anna, Rivalta di Torino (TO) (IT); DISTASO, Luca, Gemonio (VA) (IT); RIKALO, Natasa, Milano (MI) (IT); CORBO, Luca, Comabbio (VA) (IT); NIEMCZYK, Maksymilian, Wroc aw (PL); PAWLOWSKI, Wojciech, Wroc aw (PL)
(74) Representative: Buzzi, Notaro & Antonielli d'Oulx S.p.A.

(57) **Abstract**

The invention relates to a handle (400; 500) for an assembly (100) for grilling in a domestic oven, said handle (400; 500) comprising a grip (420; 520), a hollow portion (430) connected to said grip (420; 520) and configured to receive according to a shape coupling a handle portion (312) of a basket (300) of a grilling assembly (100), and a lever (421; 521) movably coupled to the grip (420; 520). The lever (421; 521) comprises one or more arms pivoted on the grip (420; 520) near the end thereof opposite to the hollow portion (430; 530), said one or more arms being movable relative to the grip (420; 520) between an open position that allows said shape coupling and a closed position adapted to obtain a force coupling with the basket (300).

Thanks to the shape and force coupling, the handle according to the invention guarantees a secure and precise grip of the basket making its operation effective and minimizing any risk for the user.

## Description

### Technical field of the invention

The present invention relates to an assembly for grilling in the cavity of a domestic oven and in particular a handle for its operation.

### Background of the invention

Modern domestic ovens are generally provided with heating elements of various types to allow different types of cooking. In addition to the electric resistances arranged under the cooking cavity and the fans with or without heating elements, a radiant-type heating element is usually arranged in the upper part of the cooking cavity to allow grilling. The radiant element is typically located in a position corresponding to the upper wall of the cooking cavity to maximize the usable space for food inside the cavity itself.

To perform grilling, a user can place the food to be grilled on one of the oven shelves, made for example of stainless-steel or chrome-plated steel wire, and places a drip tray underneath it to collect the fat and liquids released by the food during cooking.

Specific accessories for oven grilling are also known, for example assemblies comprising combinations of trays and grills, which are specifically shaped for insertion into the trays and are provided with support feet that act as spacers relative to the bottom of the trays.

Assemblies for grilling comprising combinations between oven shelves and special perforated containers, typically made of metal wire, are also known.

As known, during a grilling process in an oven, the food - typically meat, fish and/or vegetables - is placed substantially flattened on the grill and must be periodically turned over to expose both sides to the radiant element placed in the upper part of the cooking cavity. This operation requires at least partial extraction of the shelf and the drip tray from the oven cavity, or of the grilling accessory, and the turning over of each individual piece of cooking food, which causes considerable heat dispersion into the surrounding environment and also risks of burns for a user.

Furthermore, the extraction of the shelf and the drip tray from the oven cavity, or of the grilling accessory, often results in soiling of the surfaces adjacent to the oven.

To overcome these drawbacks, the Applicant has developed a grilling assembly comprising a frame shaped like an oven shelf and one or more metal-wire baskets, which are respectively removably constrained to the frame and housed in an opening obtained in it. The baskets are also respectively pivotally constrained to the frame around a rotation axis, thus allowing them to be flipped 180° relative to the frame to periodically turn over the food during a grilling process.

Thanks to this configuration, during a grilling process it is possible to rotate the baskets completely inside the oven cavity without requiring the extraction of the frame and the baskets themselves. It is thus possible to reduce heat losses from the oven cavity.

This grilling assembly is the subject of the co-pending Italian patent application No. 102024000018451.

The baskets of the grilling assembly, such as those of the assembly described above, are typically provided with protruding portions shaped like handles, which can be operated by a user with an oven glove or mitt from outside the oven cavity itself, minimizing the risk of burns.

To not hinder the closing of the oven door, the protruding portions shaped like handles have rather limited dimensions in the depth direction. Therefore, operating the baskets with an oven glove or mitt is not easy and involves risks of burns.

Removable handles for grilling assemblies are known, which can be removed from said assemblies during a cooking process to minimize their bulk. The ergonomics of use, in particular the ease of mounting and dismounting the handles from the baskets, are of fundamental importance for a user.

There is also a strong need to ensure a secure grip of the handles on the baskets during the operation of the grilling assemblies, in particular during the rotation of the baskets and their removal from the respective supports.

GB 2 490 172 A discloses a handle assembly for safely lifting a kitchen container, comprising: an elongated handle; a first opening at one end of the handle adapted to receive a fixing element on the container, the opening extending from an open mouth to a blind end along a first axis; a second opening in the handle that intersects the first opening, the second opening being positioned to align with a recess in the fixing element; a locking element movably connected to the handle, the locking element including a projection disposed in the second opening, the locking element being movable to extend the tip of the projection into the first opening, and wherein no elastic means are provided to push the projection into the first opening.

US 4 241 946 A discloses a removable handle assembly for attachment to a side handle of a cooking utensil. The assembly comprises a handle body provided with a connecting end and an opposite end, inside which a longitudinal channel is defined. An elongated insert is housed in the channel, hinged near the connecting end, to which a lever is fixed provided with a connecting portion and an engagement portion equipped with a cam. The connecting portion engages the side handle of the utensil, while the portion provided with a cam cooperates removably with a swing arm assembly placed near the opposite end of the handle body. Operating the swing arm assembly allows the insert to be engaged or disengaged and, consequently, to frictionally engage the connecting portion of the lever with the side handle of the utensil.

Other examples of removable handles for cooking utensils are known for example from US 1 364 552 A and US 2012/225178 A1.

### Summary of the invention

The technical problem faced and solved by the present invention is therefore that of providing a removable handle for operating the baskets of an oven grilling assembly such as the one described in the co-pending Italian patent application No. 102024000018451 that allows maximizing the ergonomics of use and the ease of mounting and dismounting.

This problem is solved by a handle according to claim 1.

Preferred characteristics of the present invention are the subject of the dependent claims.

The handle according to the invention comprises a body having a grip to which a hollow portion is connected, configured to obtain a matching shape coupling with the handle portion of a basket of an oven grilling assembly, such as for example the one described in the co-pending Italian patent application No. 102024000018451. The handle also comprises a lever associated with the grip, which allows a user to selectively lock and unlock the handle portion of the basket received in the hollow portion of the handle.

The lever comprises at least one arm pivotally connected proximate the end of the grip opposite to the one to which the hollow portion is connected. In this way it is possible to maximize the arm of the force acting on the handle portion of a basket.

At the end intended to lock the handle portion of a basket, the lever can comprise a hook configured to fit a corresponding opening made in the handle portion. Thanks to this configuration, which defines a further shape coupling between the handle and the handle portion, the operation of the basket is safer for the user.

Also to increase safety in the operation of the basket, the surface of the lever intended to be gripped by a user is provided with a surface finish that defines a grip portion with a high coefficient of friction. This surface finish can for example be knurling, serration or other similar texture.

To allow the dismounting of the handle from the basket, it comprises biasing means adapted to move the lever away from the grip when a user does not exert a force against it. The biasing means can be advantageously made integrally with the lever, thus optimizing the manufacturing and assembly costs of the handle.

Other advantages, characteristics and modes of use of the present invention will be apparent from the following detailed description of some embodiments, presented by way of example and not limitation.

### Brief description of the figures

Reference will be made to the figures of the accompanying drawings, in which:
- figure 1 is a perspective view showing an oven grilling assembly;
- figure 2 is a perspective view showing a basket of the grilling assembly of figure 1;
- figure 3 shows a removable handle according to an embodiment of the present invention;
- figure 4 shows the basket of figure 2 on which the removable handle of figure 3 is mounted in an engagement position;
- figure 5 shows the basket of figure 2 on which the removable handle of figure 3 is mounted in a locking position;
- figure 6 shows a phase of the rotation of a basket of the grilling assembly of figure 1 by means of the removable handle of figure 3;
- figure 7 is an exploded view of the handle of figure 3;
- figure 8 is a partial longitudinal sectional view of the handle of figure 3 in the engagement position of a basket;
- figure 9 is a partial longitudinal sectional view of the handle of figure 3 in the locking position of a basket;
- figure 10 shows a removable handle according to an alternative embodiment of the present invention;
- figure 11 is an exploded view of the handle of figure 10;
- figure 12 is a partial longitudinal sectional view of the handle of figure 10 in the engagement position of a basket;
- figure 13 is a partial longitudinal sectional view of the handle of figure 10 in the locking position of a basket.

### Detailed description of preferred embodiments

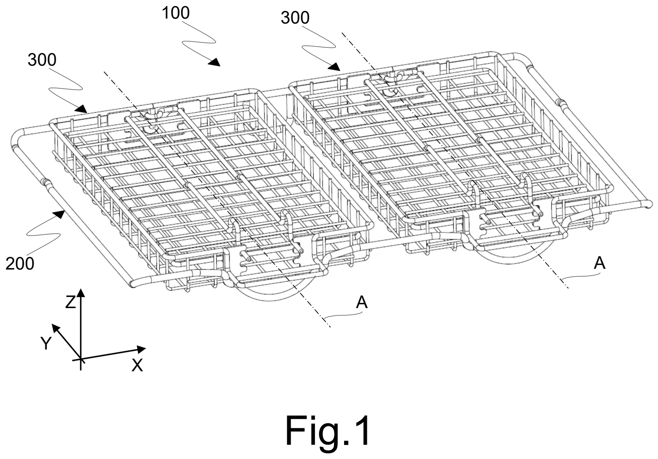

Figure 1 shows an example of an assembly 100 for grilling in an oven, in particular the one according to the co-pending Italian patent application No. 102024000018451. The assembly 100 comprises a frame 200 made of metal wire that houses one or more baskets 300 also made of metal wire. The baskets 300, for example two in the illustrated embodiment, are removably constrained to the frame 200 and can respectively rotate relative thereto about a longitudinal axis A.

In the figures, the grilling assembly 100 is shown with reference to a set of axes X, Y and Z, wherein the axes X and Y define a horizontal plane, while the axis Z represents a vertical direction along which the force of gravity acts.

The frame 200 is shaped like an oven shelf so that it can be inserted into the cooking cavity of a traditional oven and supported by the guides integrally formed in the side walls of the cavity itself, or by wire racks applied to the side walls of the cavity.

The frame 200 has a central opening that allows housing the baskets 300. In the illustrated embodiment, the two baskets 300 are disposed side by side.

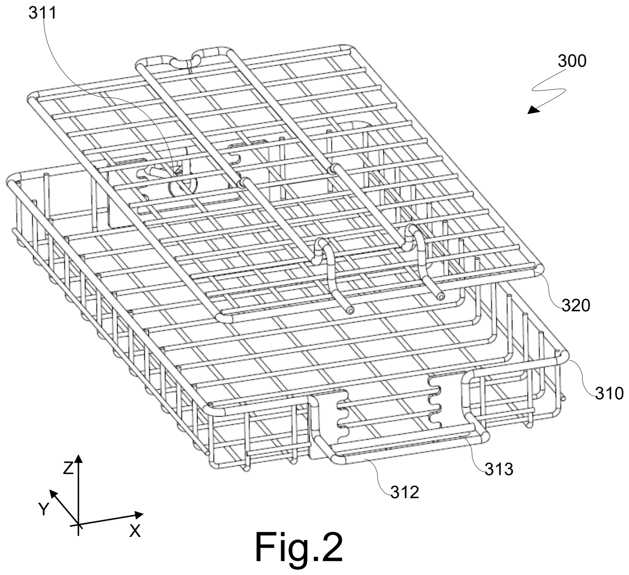

With reference to figure 2, each basket 300 comprises a body 310 of box-like shape and a lid 320. The lid 320 is removably fixed to the body 310 of the basket 300.

As indicated above, each basket 300 is removably constrained to the frame 200 and is pivotable relative thereto about the longitudinal axis A.

For this purpose, on the body 310 of each basket 300, portions 311, 312 protruding outward are obtained on two opposite sides in the direction of axis A, which allow the basket 300 to rest on the opposite edges of the frame 200 and to rotate relative thereto. On the opposite edges of the frame 200, correspondingly shaped portions are obtained, that define a support and hinge constraint for the basket 300.

The protruding portion 312 intended to face the door of an oven in an operative configuration of the basket 300 is shaped like a handle, for example of rectangular shape, in order to allow a user to grasp the basket 300. In the illustrated embodiment the handle portion 312 is obtained from a portion of a metal wire that forms the upper edge of the body 310 of the basket 300, appropriately shaped so as to protrude outward in a position corresponding to the closure zone of the lid 320. The handle portion 312 made of metal wire defines a through opening 313 relative to the body 310.

By operative condition it is meant that the basket 300 is inserted into the frame 200 and the grilling assembly 100 is housed in the cavity of an oven.

For grasping and operating the basket 300, a removable handle 400 is used.

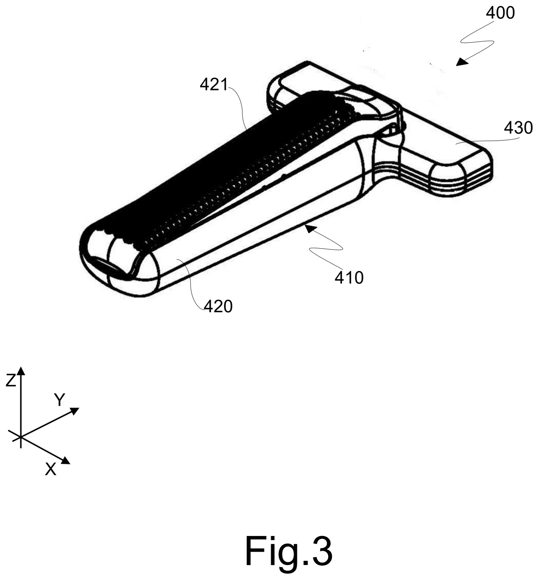

Figure 3 shows a removable handle 400 according to an embodiment of the present invention.

The removable handle 400 comprises a body 410 having a grip 420 to which a hollow portion 430 is connected, configured to receive the handle portion 312 of a basket 300 of the grilling assembly 100 and to obtain with said handle portion a matching shape coupling.

This shape coupling is sufficient to enable the rotation of the basket 300 relative to the frame 200 when the grilling assembly 100 is inserted into the oven cavity during a cooking process.

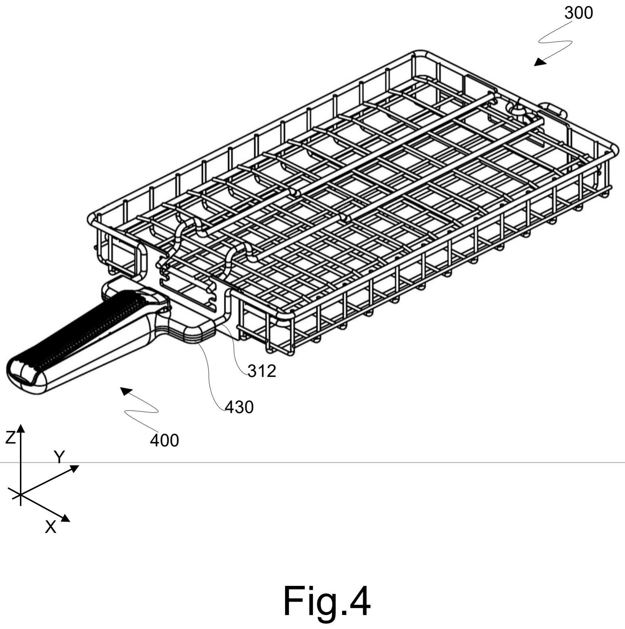

Figure 4 shows the handle 400 inserted into the handle portion 312 of the basket 300, thus engaging it and obtaining with it the aforementioned shape coupling. As can be seen, the handle portion 312 is inserted into the hollow portion 430 of the handle 400.

The removable handle 400 also comprises a lever 421 movably coupled to the grip 420, in particular pivotally connected thereon at the end opposite to the one connected to the hollow portion 430. The lever 421 comprises at least one arm that allows a user to selectively lock and unlock the handle portion 312 of the basket 300.

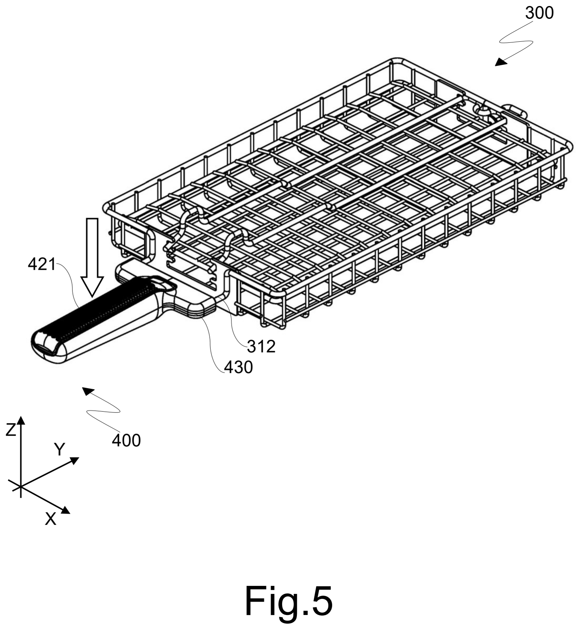

Figure 5 shows the handle 400 inserted into the handle portion 312 of the basket 300 and in a locking configuration of the handle portion 312. To obtain this configuration, the lever 421 is actuated, which presses at the free end thereof on the handle portion 312 obtaining a force coupling. The pressing force exerted by a user is schematically indicated by the arrow in the figure.

Thanks to the shape and force coupling, the handle 400 according to the invention guarantees a secure and precise grip of the basket 300 which allows not only its rotation relative to the frame 200 about the axis A, but also its extraction therefrom at the end of the cooking process minimizing any risk for the user.

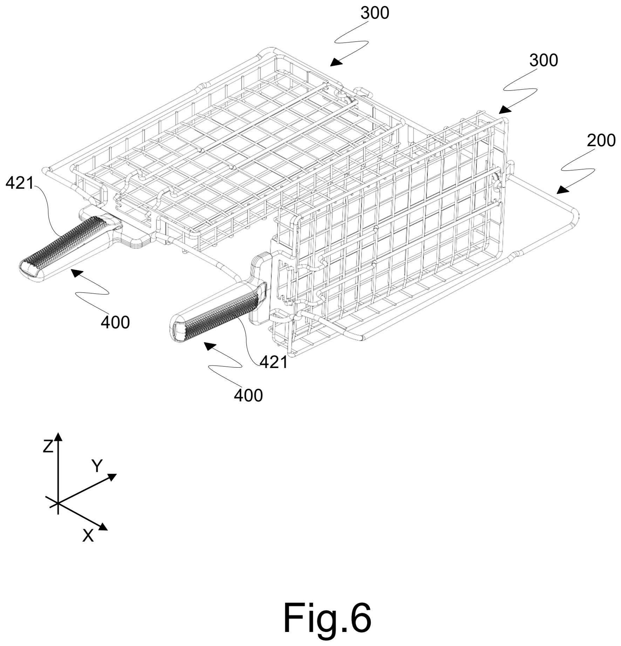

Figure 6 shows the assembly 100 with two baskets 300 on which respective handles 400 are mounted.

One basket 300 rests on the frame 200 and is therefore in a cooking configuration. The other basket 300 is shown rotated by about 90° relative to the frame 200 using the handle 400 with the lever 421 in the locking configuration shown in figure 5.

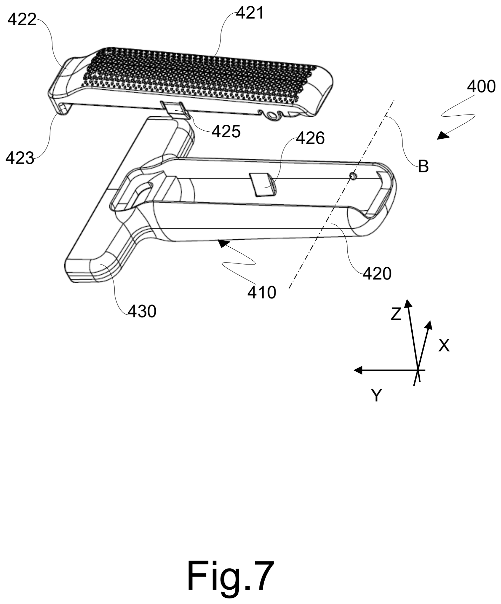

With reference to figures 7 to 9, in the illustrated embodiment the lever 421 of the handle 400 comprises a single arm, coinciding with the lever itself, which is pivotally connected on the grip 420 about an axis B that is located proximate the end of the grip 420 opposite to the hollow portion 430. The arm of the lever 421 is movable relative to the grip 420 between an open position and a closed position.

It will be understood that the configuration of the lever described above is that of a third-class lever.

Both the grip 420 and the lever 421 are advantageously hollow bodies suitable for fabrication in plastic material.

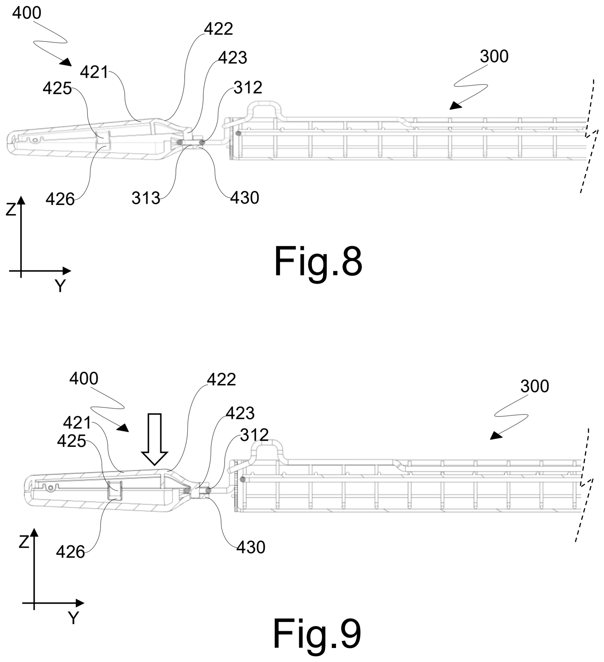

In the open position, shown in detail in the longitudinal section of figure 8, the lever 421 is rotated outward from the grip 420 defining a gap in the hollow portion 430 suitable for receiving the handle portion 312 of the basket 300 to define the shape coupling.

By pressing the lever 421 near its free end 422, that is, near the hollow portion 430 of the handle 400, the lever rotates inward toward the grip 420. The free end 422 presses against the handle portion 312 thus obtaining the locking of the basket 300 according to a force coupling. This situation is shown in the longitudinal section of figure 9.

Again with reference to figures 7, 8 and 9, according to an embodiment of the invention, a hook 423 that engages the opening 313 obtained in the handle portion 312 can be advantageously formed at the free end 422 of the arm of the lever 421. Thanks to this configuration, the handle 400 obtains a second shape coupling with the handle portion 312 of the basket 300, which makes operation thereof relative to the frame 200 even safer.

To allow the return of the lever 421 from the closed position to the open position, and thus the disassembly of the handle 400 from the basket 300, the handle 400 comprises biasing means acting in the vertical direction Z between the grip 420 and the lever 421. In other words, the biasing means urge the arm of the lever into the open position against the force exerted by a user to grasp and operate the basket 300.

The biasing means can be constituted by a resilient element, such as for example a spring. Alternatively, and more advantageously from the point of view of manufacturing and assembly costs, the resilient element can be made integrally with one of the lever 421 and the grip 420. The deformation in the elastic field of the resilient element generates between the grip 420 and the lever 421 a separation force that allows the transition from the closed position to the open position.

Again with reference to figures 7 to 9, in the illustrated embodiment of the invention, the lever 421 comprises for example a pair of lateral protrusions 425, obtained in an intermediate position between the axis B and the free end 422. The lateral protrusions 425 are for example shaped like flaps and are directed towards the grip 420. By compressing the lever 421 against the grip 420 the lateral protrusions 425 flex towards each other, thus generating a pair of forces whose resultant opposes the compression force of the lever 421 and allows its return to the open position when the compression force exerted by a user ceases.

To favor the flexion of the lateral protrusions 425 the grip 420 can advantageously comprise a pair of ribs 426 disposed at the lateral protrusions 425 themselves. In particular, during the compression of the lever 421 the lateral protrusions come into contact with the ribs 426, which guide and favor their deformation in the elastic field.

In the embodiment shown in figures 3 to 7, the lever 421 advantageously presents a surface finish made on the face intended to be compressed by a user. The surface finish can for example be knurling, serration or similar, which allows increasing the coefficient of friction of the lever 421. This configuration guarantees a safer grip for the user.

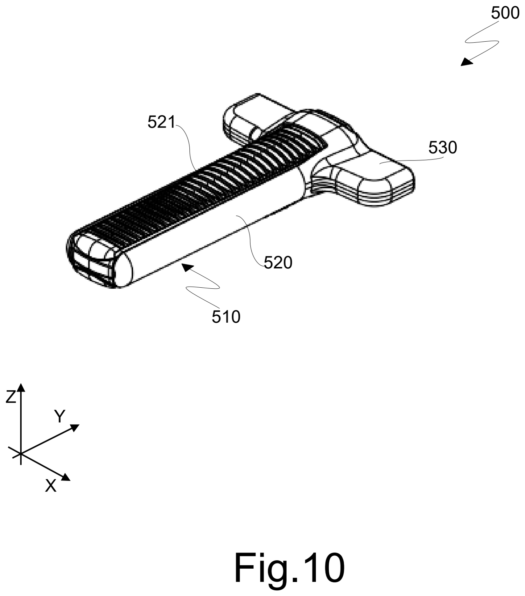

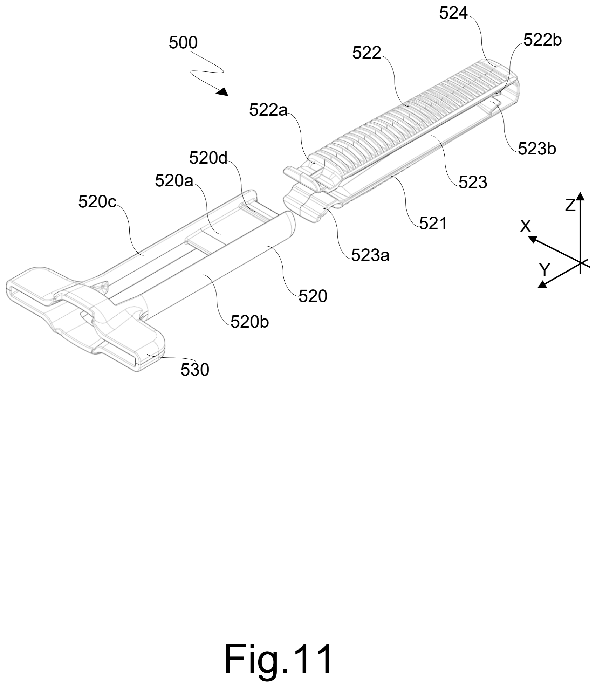

Referring now to figures 10 and 11 an alternative embodiment of the invention will be described.

Similarly to the embodiment described above, the removable handle 500 comprises a body 510 having a grip 520 to which a hollow portion 530 is connected, configured to receive the handle portion 312 of a basket 300 of the grilling assembly 100.

The removable handle 500 also comprises a lever 521 movably coupled to the grip 520, which allows a user to selectively lock and unlock the handle portion 312 of the basket 300.

Also in this case the lever 521 is a third-class lever with the fulcrum disposed at its end opposite to the one intended to engage and lock the handle portion 312 of the basket. Differently from the lever 421 of the embodiment described with reference to figures 3 to 9, the lever 521 in this case has two parallel arms 522, 523 connected to one another at a fulcrum 524. It will be understood that the configuration of the lever 521 is similar to that of an ice tongs.

As shown in figure 11, the free ends of the arms 522, 523 have respective curved portions 522a, 523a configured to snap into the hollow portion 530. The curved portions 522a, 523a also define respective hooks suitable for engaging the opening 313 made in the handle portion 312 of the basket 300 from both sides in the vertical direction Z. This allows defining not only a force coupling, but also a further shape coupling between the handle 500 and the handle portion 312, which results in a more effective and secure locking for the operation of the basket 300.

To allow the return of the lever 521 from the closed position to the open position, biasing means acting in the vertical direction Z are provided between the latter and the grip 520.

The biasing means can be constituted by a resilient element such as for example a spring. Similarly to the first embodiment of the invention, also in this case the biasing means can be advantageously made integrally with one of the lever 521 and the grip 520, thus optimizing their manufacturing and assembly costs.

Again with reference to figure 11, the biasing means are for example constituted by a pair of flaps 522b, 523b respectively made on the arms 522, 523 proximate the fulcrum 524.

Each flaps 522b, 523b extends from the respective arm 522, 523 forming an acute angle therewith. By pressing the arms 522, 523 of the lever 521 to lock the handle portion 312 of the basket 300, the flaps 522b, 523b compress elastically in contact with the grip 520, allowing to return the arms 522, 523 from the closed position to the open position when the pressing force ceases.

To facilitate the movement of the arms 522, 523 of the lever 521, the grip 520 presents near the hollow portion 530 of the handle 500 a through opening in the vertical direction Z, and at the free end thereof a web 520a is made that connects its lateral walls 520b, 520c. In an assembled configuration the web 520a constitutes an abutment for the flaps 522b, 523b.

The lever 521 is mounted on the grip 520 by sliding it longitudinally in the Y direction until the curved portions 522a, 523a are completely snapped into the hollow portion 530. To prevent the lever 521 from accidentally disengaging from the grip 520, on the septum 520a can be advantageously made at least one projection 520d that constitutes a stop element for at least one of the flaps 522b, 523b in the longitudinal direction Y. In the illustrated embodiment on the web 520a two symmetrical projections are made arranged on its opposite faces in the vertical direction Z, which define stop elements for both flaps 522b, 523b.

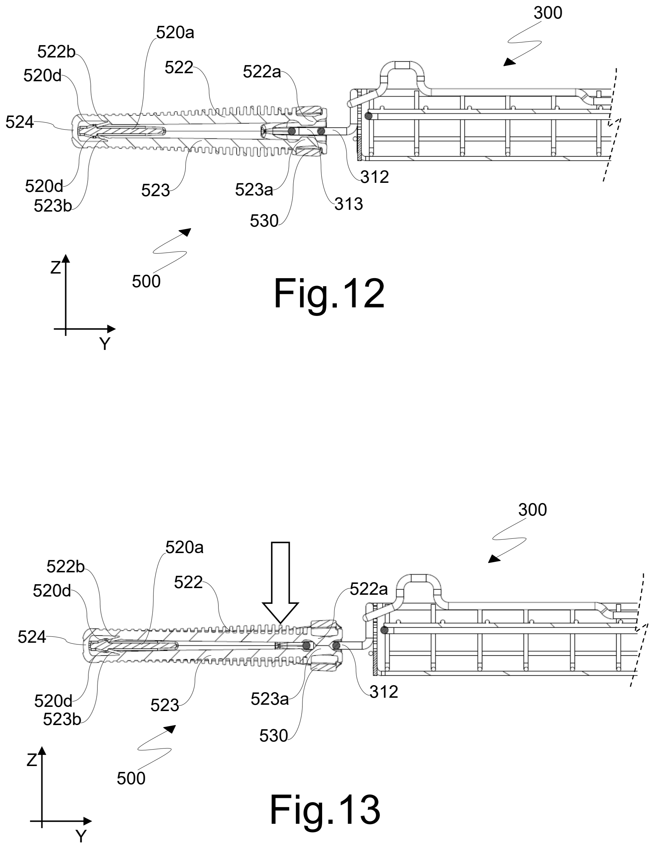

Figure 12 shows a longitudinal section of the handle 500 of figure 10 in the engagement position of the basket 300. In this condition the arms 522, 523 are spaced apart from one another defining the open position that allows the coupling of the handle 500 with the handle-shaped portion 312 of the basket 300.

Figure 13 shows a longitudinal section of the handle of figure 10 in the locking position of a basket. In this condition the arms 522, 523 are pressed one against the other defining the closed position that allows the locking of the handle 500 on the handle-shaped portion 312 of the basket 300. As can be seen, in fact, the curved free ends 522a, 523a of the arms are in contact with one another and engage the opening 313 of the handle-shaped portion 312 of the basket 300.

It will be understood that the insertion of the free ends 522a, 523a of the arms 522, 523 into the hollow portion 530 allows limiting the movement of the arms themselves in the opening phase, defining for them end-of-travel positions.

Again with reference to figure 10, the lever 521 advantageously presents, on the faces of its arms 522, 523 intended to be compressed by a user, a surface finish that defines a grip portion for the user. Similarly to the first embodiment of the invention, the surface finish can be knurling, serration or similar.

The present invention has been described so far with reference to its preferred embodiments. It is to be understood that other embodiments may exist that pertain to the same inventive core, defined by the claims set forth below.

## Claims

1. A handle (400; 500) for a grilling assembly (100) for a domestic oven, said handle (400; 500) comprising a body (410; 510) having:
i) a grip (420; 520),
ii) a hollow portion (430; 530) connected to said grip (420; 520) and configured to receive a handle portion (312) of a basket (300) of a grilling assembly (100) so as to define a matching shape coupling therewith,
iii) a lever (421; 521) movably coupled to the grip (420; 520),
wherein said lever (421; 521) comprises one or more arms (421; 522, 523) pivotably connected to the grip (420; 520) proximate to the end thereof arranged opposite to the hollow portion (430; 530), said one or more arms (421; 522, 523) being movable relative to the grip (420; 520) between an open position that enables said matching shape coupling and a closed position where a force is exerted onto the handle portion (312) of the basket (300),
wherein the handle (400; 500) further comprises biasing means suitable to urge the one or more arms (421; 522, 523) of the lever (421; 521) in said open position, said biasing means being arranged between the one or more arms (421; 522, 523) of the lever (421; 521) and the grip (420; 520),
**characterized in that** said biasing means are formed integrally with one between the one or more arms (421; 522, 523) of the lever (421; 521) and the grip (420; 520), and **in that** said biasing means comprise a pair of flaps (425; 522b, 523b) protruding from the one or more arms (421; 522, 523) of the lever (421; 521) toward the grip (420; 520).

2. The handle (400) according to claim 1, wherein the flaps (425) are defined by a pair of side protrusions extending from the arm of the lever (421) and facing the grip (420).

3. The handle (400) according to claim 2, wherein the grip (420) comprises a pair of ribs (426) formed in a position corresponding to the position of the flaps (425) of the lever (421), whereby the flaps (425) are deformed upon contact with said ribs (426).

4. The handle (500) according to claim 1, wherein the lever (521) comprises a pair of parallel arms (522, 523) connected to one another at a fulcrum (524) and wherein the flaps (522b, 523b) are respectively associated with the arms (522, 523) at said fulcrum (524), each flap (522b, 523b) extending from the respective arm (522, 523) and forming an acute angle therewith.

5. The handle (500) according to claim 4, wherein the grip (520) features a web (520a) formed at a free end thereof, said web (520a) joining side walls (520b, 520c) of the grip (520), and wherein the web (520a) forms an abutment for the flaps (522b, 523b).

6. The handle (400; 500) according to any one of claims 1-5, wherein at the free end of the arm or arms (421; 522, 523) of the lever (421; 521) a hook (423; 522a, 523a) is formed, said a hook (423; 522a, 523a) being so configured as to fit an aperture (313) formed in the handle portion (312) of a basket (300) of a grilling assembly (100), the hook (423; 522a, 523a) defining with said aperture (313) a matching shape coupling.

7. A grilling assembly (100) for a domestic oven, said assembly (100) comprising:
i) a frame (200) shaped as an oven tray,
ii) one or more baskets (300) made of a metal wire that are removable and pivotably restrained to said frame (200), said one or more baskets (300) comprising respective handle portions (312) suitable to allow a user to move them relative to the frame (200),
**characterized by** comprising a handle (400; 500) according to any one of claims 1-6.
